# DEMANDE DE BREVET EUROPEEN

(11) **EP 2 056 077 A1**
(43) Date de publication de la demande: **06.05.2009**
(21) Numéro de dépôt: 07301512.5
(22) Date de dépôt: 30.10.2007
(51) Int. Cl.: G01F 15/00, G01F 15/06

(54) **Compteur pourvu de moyens de detection de fraude ou de tentative de fraude**

(71) Demandeur: Actaris SAS, 92100 Boulogne-Billancourt (FR)
(72) Inventeur: Bouzid, Tarek, 71000, MACON (FR); Bertorello, Flavio, 12040, GOVONE (IT); Wils, Pierre, 63120, SAUVIAT (FR)
(74) Mandataire: Lenne, Laurence

(57) **Abrégé**

L'invention concerne un compteur de fluide comportant un totalisateur (1) comportant un organe de comptage et un capot (2), ce capot présentant un agencement de rupture ménagé sur sa surface supérieure, destiné à la détection de fraude.

Selon l'invention, ledit agencement de rupture est disposé au droit d'une partie de réception d'un module de télé relevé (4, 4') associé.

## Description

L'invention concerne un compteur, en particulier un compteur de fluide, pourvu de moyens de détection de fraude ou de tentative de fraude.

Les compteurs de fluide sont destinés à mesurer la quantité ou le débit de fluide consommé par un abonné. Pour des raisons diverses et bien entendu pour diminuer le montant de leurs factures, certains abonnés essaient de freiner ou même d'arrêter l'enregistrement de leur consommation. Ces fraudes peuvent prendre diverses formes.

Une de ces méthodes de fraude consiste à exercer une pression sur la face supérieure du capot du totalisateur de façon à freiner ou à arrêter son fonctionnement. Les fraudeurs utilisent un outil, tel qu'un serre-joint, pour exercer cette pression. Le corps du compteur étant en laiton ou en matière plastique très résistant, la partie la plus sensible à l'écrasement est le totalisateur et notamment sa vitre supérieure de visionnement de la consommation. A proximité de cette vitre se trouve un mécanisme d'engrenage du totalisateur. Les fraudeurs essaient de freiner ou d'arrêter ce mécanisme en exerçant cette pression sur le mécanisme, à proximité de la vitre. Lorsque le serre-joint est enlevé, il n'y a pas de trace de la fraude si la vitre n'est pas endommagée, ce qui est souvent le cas car la vitre est généralement réalisée en matériau relativement élastique, tel que le polycarbonate.

Le document de brevet EP 1 326 061 divulgue une solution à ce problème. Des lignes de rupture sont ménagées sur la surface supérieure du capot recouvrant le totalisateur du compteur, au droit du disque indicateur. Lorsque la tentative de fraude vise à bloquer ce disque, par pression comme évoqué plus haut, la rupture de cette zone témoigne de cette tentative de fraude.

Par ailleurs, les compteurs sont actuellement souvent associés à un module de télé relevé, qui est destiné au relevé à distance de la consommation et qui est installé sur des compteurs déjà installés. Pour ce faire, il peut être prévu une cavité d'encastrement ménagée sur la face supérieure du capot du totalisateur et dans laquelle est disposé précisément le module, afin d'assurer un positionnement précis de l'agencement de lecture du module par rapport à un agencement interne au totalisateur et assurant la détection de la consommation, par exemple le disque indicateur. Cette détection peut être effectuée de façon optique, capacitive, inductive ou autre, par exemple en scrutant le déplacement du disque indicateur. Un tel compteur avec module associé est décrit par exemple dans le document de brevet EP 1 026 481.

Dans le cas d'un tel compteur avec module associé, la détection de fraude telle qu'évoquée plus haut est encore plus critique. En effet, afin d'assurer une lecture correcte par le module, l'organe de comptage interne au totalisateur, par exemple le disque indicateur, doit être installé le plus près possible du capot ou de la vitre le recouvrant. Il en résulte que la fraude par pression est facilitée, car peu d'effort suffit pour bloquer le déplacement de l'organe de comptage.

Le but de l'invention est d'assurer la détection de la tentative de fraude comme évoqué plus haut, tout en facilitant la mise en place d'un module de télé relevé.

Pour ce faire, l'invention propose un compteur de fluide comportant un totalisateur comportant un organe de comptage et un capot, ce capot présentant un agencement de rupture ménagé sur sa surface supérieure, destiné à la détection de fraude, caractérisé en ce que ledit agencement de rupture est disposé au droit d'une partie de réception d'un module de télé relevé associé.

Selon un mode de réalisation préféré, ledit agencement de rupture est constitué d'un élément de recouvrement de ladite partie de réception, connecté au capot par au moins un élément sécable.

Selon une variante, ledit élément de recouvrement peut être relié au capot par au moins une ligne de rupture agencée dans la paroi du capot.

Ladite partie de réception peut être une cavité d'encastrement dudit module.

Selon une autre variante, ledit élément de recouvrement est disposé au droit d'un disque indicateur interne au totalisateur.

Ledit élément de recouvrement est avantageusement connecté au capot par au moins deux tenons sécables.

Ledit capot peut comprendre une vitre de visualisation d'un disque indicateur interne au totalisateur.

L'invention est décrite ci-après plus en détail à l'aide de figures ne représentant que des modes de réalisation préférés de l'invention.

Les figures 1 à 3 sont des vues en perspective illustrant un premier mode de réalisation de l'invention.

Les figures 4 à 6 sont des vues en perspective illustrant un second mode de réalisation de l'invention.

La figure 7 est une vue de détail en perspective de ce second mode de réalisation de l'invention.

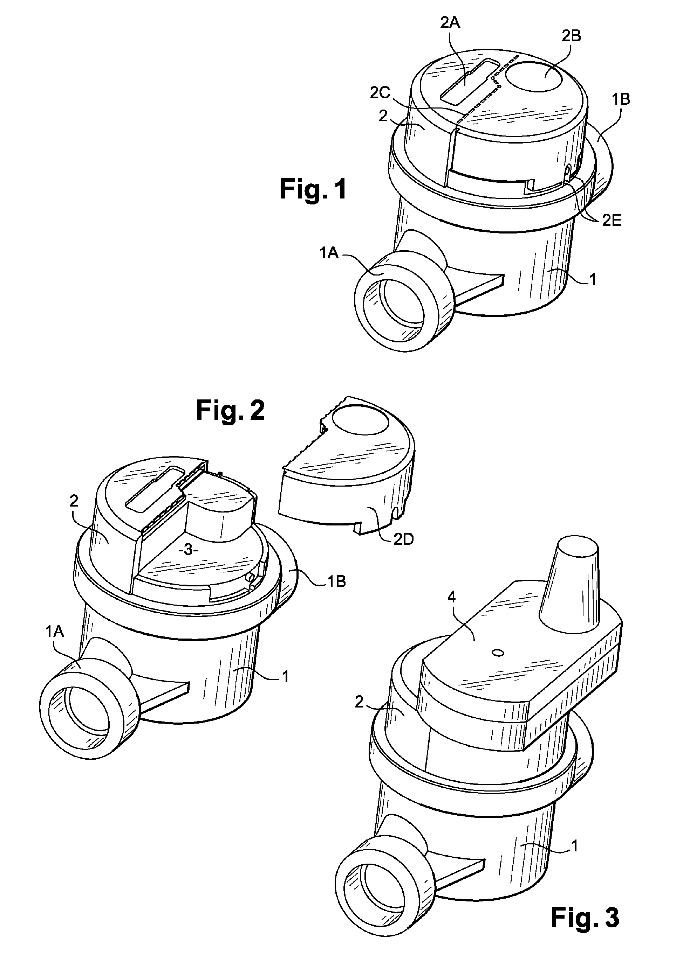

La figure 1 représente un compteur de fluide, en particulier d'eau, selon un premier mode de réalisation de l'invention. Ce compteur comporte une bâche 1 pourvue d'un tronçon de conduite d'entrée 1A et un tronçon de conduite de sortie 1 B de l'eau. Dans cette bâche 1, se trouve de façon connue un élément mesurant ou une chambre de mesure, par exemple à turbine ou à piston oscillant. La quantité de fluide ainsi mécaniquement mesurée est transmise à un totalisateur disposé au-dessus de la chambre de mesure, couvert et fixé par un capot 2. Ce capot comporte une fenêtre 2A de visualisation d'un élément de comptage de type index à tambours numérotés et une vitre 2B de visualisation d'un disque indicateur.

Ce capot 2 présente un agencement de rupture ménagé sur sa surface supérieure, destiné à la détection de fraude, constitué d'une ligne de rupture 2C agencée dans la paroi du capot. Lorsqu'une tentative de fraude vise à bloquer le disque indicateur, par pression comme évoqué plus haut, la rupture, totale ou partielle, de cette ligne de rupture 2C témoigne de cette tentative de fraude.

Par ailleurs, la ligne de rupture 2C est disposée au droit d'une cavité de réception 3 d'un module de télé relevé 4. Lorsque le module 4 est destiné à être installé sur le compteur, le technicien habilité casse volontairement la ligne de rupture 2C et enlève la partie 2D ainsi séparée du capot, comme illustré sur la figure 2. La cavité de réception 3 est alors libérée et le module de télé relevé 4 peut être installé par encastrement partiel dans cette cavité, comme illustré sur la figure 3.

Solidaire du capot 2, la partie 2D constitue donc un élément de recouvrement de la cavité d'encastrement 3. Outre la ligne de rupture 2C, elle est également connectée au capot 2 par deux tenons 2E disposés à proximité de la bâche 1. L'enlèvement de cette partie 2D peut ainsi être réalisée aisément par insertion d'un outil, tel un tournevis, dans la fente à proximité de ces tenons puis écartement et rupture des tenons 2E et de la ligne de rupture 2C.

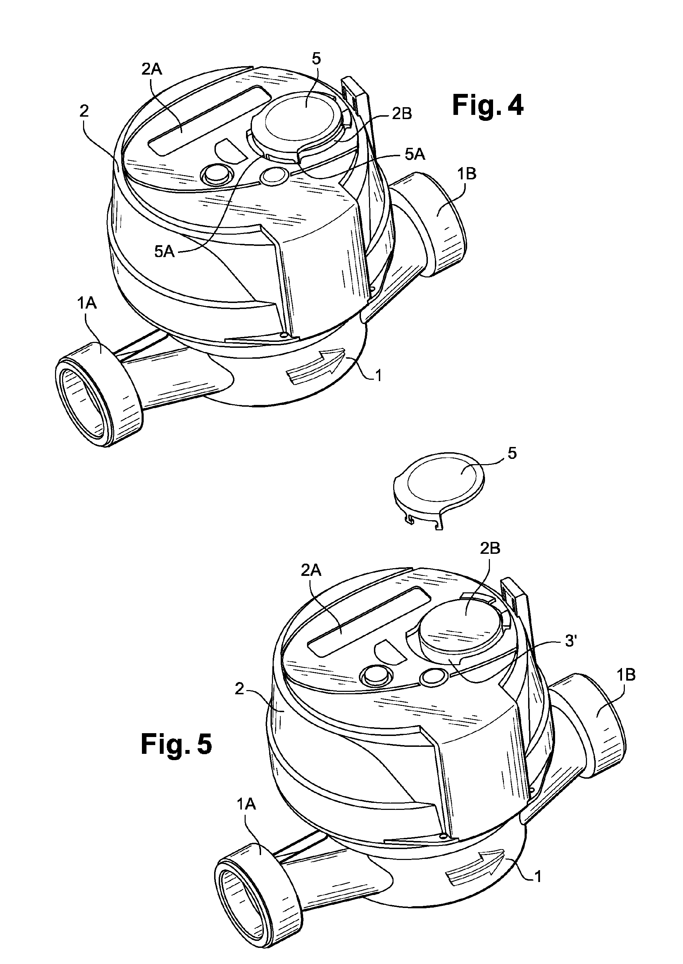

La figure 4 représente un compteur de fluide, en particulier d'eau, selon un second mode de réalisation de l'invention. Ce compteur comporte une bâche 1 pourvue d'un tronçon de conduite d'entrée 1A et un tronçon de conduite de sortie 1 B de l'eau. Dans cette bâche 1, se trouve de façon connue un élément mesurant ou une chambre de mesure, par exemple à turbine ou à piston oscillant. La quantité de fluide ainsi mécaniquement mesurée est transmise à un totalisateur disposé au-dessus de la chambre de mesure, couvert et fixé par un capot 2. Ce capot comporte une fenêtre 2A de visualisation d'un élément de comptage de type index à tambours numérotés et une vitre ou une fenêtre 2B de visualisation d'un disque indicateur.

Ce capot 2 présente un agencement de rupture ménagé sur sa surface supérieure, destiné à la détection de fraude, constitué d'un élément de recouvrement 5 connecté au capot par plusieurs tenons sécables 5A. Lorsqu'une tentative de fraude vise à bloquer le disque indicateur, par pression comme évoqué plus haut, la rupture, totale ou partielle, de ces tenons 5A témoigne de cette tentative de fraude.

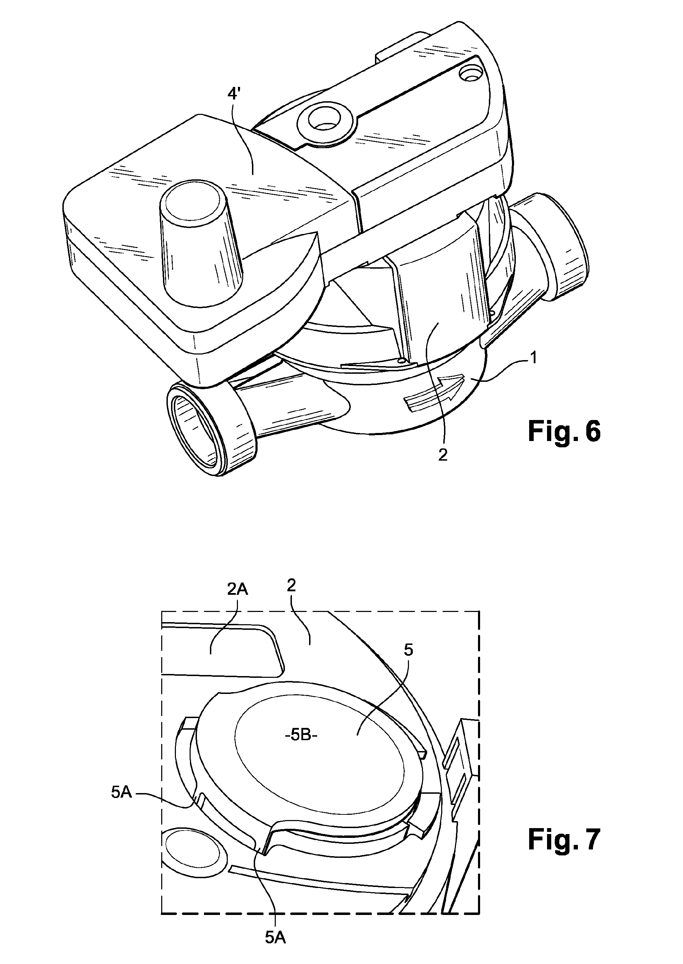

Par ailleurs, cet élément de recouvrement 5 est disposé au droit d'une partie de réception 3' d'un module de télé relevé 4', à savoir au droit du disque indicateur interne au totalisateur. Lorsque le module 4' est destiné à être installé sur le compteur, le technicien habilité casse volontairement les tenons 5A et enlève l'élément de recouvrement 5 ainsi séparé du capot, comme illustré sur la figure 5. La partie de réception 3' est alors libérée et le module de télé relevé 4' peut être installé par positionnement sur cette partie de réception, sur le disque indicateur, comme illustré sur la figure 6.

Quel que soit le mode de réalisation, une fois le module installé sur le compteur, il protège ce dernier de la fraude par pression de type serre-joint.

La figure 7 représente plus en détail cet élément de recouvrement 5 qui est un disque en matière plastique comportant au moins une zone transparente 5B pour la visualisation du disque indicateur et qui peut être moulé d'une seule pièce avec le capot 2. Il est connecté au capot 2 par plusieurs tenons 5A, de préférence répartis sur sa périphérie, qui peuvent être facilement cassés, par pression ou action de type levier sur l'élément de recouvrement 5.

## Revendications

1. Compteur de fluide comportant un totalisateur (1) comportant un organe de comptage et un capot (2), ce capot présentant un agencement de rupture ménagé sur sa surface supérieure, destiné à la détection de fraude, **caractérisé en ce que** ledit agencement de rupture est disposé au droit d'une partie de réception d'un module de télé relevé (4, 4') associé.

2. Compteur selon la revendication 1, **caractérisé en ce que** ledit agencement de rupture est constitué d'un élément de recouvrement (2D, 5) de ladite partie de réception, connecté au capot par au moins un élément sécable (5A).

3. Compteur selon la revendication précédente, **caractérisé en ce que** ledit élément de recouvrement (2D) est relié au capot par au moins une ligne de rupture (2C) agencée dans la paroi du capot (2).

4. Compteur selon la revendication précédente, **caractérisé en ce que** ladite partie de réception est une cavité d'encastrement (3) dudit module.

5. Compteur selon la revendication 2, **caractérisé en ce que** ledit élément de recouvrement (5) est disposé au droit d'un disque indicateur interne au totalisateur.

6. Compteur selon l'une des revendications 2 à 5, **caractérisé en ce que** ledit élément de recouvrement (2D, 5) est connecté au capot (2) par au moins deux tenons sécables (2E, 5A).

7. Compteur selon l'une des revendications précédentes, **caractérisé en ce que** ledit capot comprend une vitre (2B) de visualisation d'un disque indicateur interne au totalisateur.
